# FASCICULE DE BREVET EUROPEEN

(11) **EP 3 079 987 B1**
(45) Date de publication et mention de la délivrance du brevet: **07.02.2018**
(21) Numéro de dépôt: 14821802.7
(22) Date de dépôt: 08.12.2014
(51) Int. Cl.: B64G 1/40, B64G 1/42, B64G 1/50, H02S 30/10, H02S 10/40, B64G 1/22, B64G 1/44

(54) **NOUVELLE ARCHITECTURE DE VÉHICULE SPATIAL**
NEUARTIGE RAUMFAHRZEUGARCHITEKTUR
NOVEL SPACECRAFT ARCHITECTURE

(30) Priorité: 10.12.2013 FR 1362372
(43) Date de publication de la demande: 19.10.2016
(73) Titulaire: Airbus (S.A.S.), 31700 Blagnac (FR)
(72) Inventeur: GENESTE, Jean-François, F-31200 Toulouse (FR)
(74) Mandataire: Ipside
(86) Numéro de dépôt international: PCT/FR2014/053203
(87) Numéro de publication internationale: WO 2015/086970

(56) Documents cités:
- EP-A1- 0 201 727
- EP-A1- 0 807 991
- WO-A2-2004/049538
- WO-A2-2008/060737
- FR-A1- 2 956 200
- GB-A- 2 328 560
- US-A- 5 990 851

## Description

### Domaine de l'invention

La présente invention appartient au domaine des véhicules spatiaux. Plus particulièrement, l'invention concerne un véhicule spatial présentant une nouvelle architecture de génération d'énergie électrique.

### Etat de la technique

Les satellites actuels, de manière connue en soi, sont pourvus d'un corps, d'antennes destinées aux transmissions radioélectriques, et « d'ailes », situées de part et d'autre dudit corps de manière sensiblement symétrique, composées de panneaux solaires destinés à l'alimentation en énergie électrique des satellites.

Il est également connu que chaque aile forme une structure déployable, de sorte que leur encombrement soit minimal pendant le lancement du satellite et que chaque aile prenne ses dimensions et positions de fonctionnement, lorsque ledit satellite se trouve sur son orbite. Ainsi, chaque aile comporte un ensemble de panneaux solaires porteurs de cellules photovoltaïques, lesdits panneaux solaires étant articulés les uns à la suite des autres pour pouvoir occuper, soit une position repliée de lancement pour laquelle lesdits panneaux solaires sont repliés l'un sur l'autre en zigzag, soit une position déployée de fonctionnement pour laquelle lesdits panneaux solaires se trouvent au moins approximativement dans le prolongement l'un de l'autre.

Le déploiement des panneaux solaires est généralement commandé par des dispositifs d'entraînement, non réversibles, pilotés par un organe de traitement situé à bord du satellite.

De plus, les ailes sont reliées de façon articulée au corps du satellite afin de permettre d'orienter les panneaux solaires par rapport au rayonnement solaire incident, et d'augmenter le rendement desdits panneaux solaires au moyen de dispositifs d'orientation des ailes, comportant préférentiellement une pluralité de moteurs électriques et leurs électroniques de commande associées, pilotés par ledit organe de traitement.

Le nombre de panneaux solaires nécessaire au fonctionnement du satellite en orbite, les dispositifs d'entrainement, les revêtements photovoltaïques à haut rendement, ou encore les dispositifs d'orientation des ailes occasionnent un coût non négligeable dans le coût total d'un satellite, pouvant atteindre jusqu'à 20% du coût total d'un satellite récurrent.

Il est également connu des véhicules spatiaux comportant une surface de révolution dont une partie forme un concentrateur de rayonnement solaire, tel que décrit par exemple dans la demande de brevet GB 2 328 560. Ledit document est considéré comme l'art antérieur le plus proche et décrit les caractéristiques du préambule de la revendication 1.

### Exposé de l'invention

La présente invention vise à proposer une nouvelle architecture de véhicules spatiaux qui permet de réduire significativement le coût financier de réalisation d'un satellite par réduction du coût associé à la production d'énergie électrique et à la récupération de l'énergie solaire, sans pénalisation en termes de masse.

A cet effet, il est proposé par la présente invention un véhicule spatial comportant :
- un corps,
- une machine thermique,
- une surface de révolution, autour d'un axe de révolution, solidaire dudit corps, et au centre de laquelle est positionnée ladite machine thermique.

Suivant l'invention, la surface de révolution comporte une première portion formant un concentrateur de rayonnement solaire en direction de ladite machine thermique.

Ladite première portion présente un revêtement adapté à former un réflecteur de rayonnement solaire.

La machine thermique est agencée de sorte que l'entrée de ladite machine thermique est située en un point focal de la première portion. La première portion tourne en rotation autour de l'axe de révolution de la surface de révolution, via un moteur, en fonction du positionnement du soleil par rapport à la première portion de sorte que la première portion concentre le rayonnement solaire en direction de la machine thermique. L'entrée de la machine thermique, ou la machine thermique elle-même le cas échéant, tourne en rotation autour de l'axe de révolution de la surface de révolution, via un moteur, en fonction du positionnement du soleil par rapport à la première portion de sorte que l'entrée de la machine thermique, ou la machine thermique elle-même, soit toujours positionnée au point focal de la première portion où le rayonnement solaire se focalise pour récupérer ledit rayonnement solaire.

Un tel véhicule spatial, de par l'agencement de la première portion et du positionnement relatif de la machine thermique et de ladite première portion, permet ainsi de récupérer le rayonnement solaire, de le concentrer et de le diriger vers une entrée de la machine thermique pour alimenter en énergie électrique le véhicule spatial en vue de son fonctionnement.

Le véhicule spatial est préférentiellement un satellite.

Suivant des modes de réalisation préférés, l'invention répond en outre aux caractéristiques suivantes, mises en oeuvre séparément ou en chacune de leurs combinaisons techniquement opérantes.

Dans une forme préférée de réalisation, ladite première portion est une portion de révolution autour de l'axe de révolution de ladite surface de révolution. Ainsi, il n'est pas nécessaire de recourir à un moteur pour orienter la première portion vers le soleil. La forme de la première portion permet avantageusement de concentrer le rayonnement solaire quel que soit le positionnement du soleil en direction du centre de la surface de révolution, au niveau de la machine thermique, vers une pluralité de points focaux. L'ensemble de ces points focaux dessine sensiblement un cercle autour de l'axe de révolution de la surface de révolution, et de rayon sensiblement constant.

La machine thermique est agencée de sorte que l'entrée de ladite machine thermique est située en un point du cercle formé par l'ensemble des points focaux. La machine thermique, ou un de sous-systèmes tels que l'entrée de la machine thermique, tourne en rotation autour de l'axe de révolution de la surface de révolution, via un moteur, en fonction du positionnement du soleil par rapport à la première portion de sorte que l'entrée soit toujours positionnée en un point focal où le rayonnement solaire se focalise pour récupérer ledit rayonnement solaire.

Dans des modes de réalisation préférés de l'invention, la surface de révolution comporte une deuxième portion, coaxiale avec la première portion, et telle que la première portion et la deuxième portion forment l'une par rapport à l'autre un concentrateur de rayonnement solaire de type Cassegrain, de point focal situé au niveau de l'entrée de la machine thermique.

Ladite deuxième portion présente un revêtement adapté à former un réflecteur de rayonnement solaire.

La machine thermique est alors agencée de sorte que l'entrée de ladite machine thermique est située en un point focal du concentrateur de rayonnement solaire de type Cassegrain. Le concentrateur de rayonnement solaire de type Cassegrain tourne en rotation autour de l'axe de révolution de la surface de révolution, via un moteur, en fonction du positionnement du soleil par rapport audit concentrateur de rayonnement solaire de type Cassegrain de sorte que le concentrateur de rayonnement solaire de type Cassegrain concentre le rayonnement solaire en direction de la machine thermique. La machine thermique, ou un de ses sous-systèmes, tourne en rotation autour de l'axe de révolution de la surface de révolution, via un moteur, en fonction du positionnement du soleil par rapport à la première portion de sorte que l'entrée soit toujours positionnée audit point focal du concentrateur de rayonnement solaire de type Cassegrain où le rayonnement solaire se focalise pour récupérer ledit rayonnement solaire.

Dans une forme préférée de réalisation, ladite première portion et la deuxième portion sont des portions de révolution autour de l'axe de révolution de ladite surface de révolution. Ainsi, il n'est pas nécessaire de recourir à un moteur pour orienter la première portion et la deuxième portion vers le soleil. La forme de la première portion et de la deuxième portion, ainsi que leur agencement l'une par rapport à l'autre permet avantageusement de concentrer le rayonnement solaire quel que soit le positionnement du soleil en direction du centre de la surface de révolution, au niveau de la machine thermique, vers une pluralité de points focaux. L'ensemble de ces points focaux dessine sensiblement un cercle autour de l'axe de révolution de la surface de révolution, et de rayon sensiblement constant.

La machine thermique est agencée de sorte que l'entrée de ladite machine thermique est située en un point du cercle formé par l'ensemble des points focaux. La machine thermique, ou l'un de ses sous-systèmes, tourne en rotation autour de l'axe de révolution de la surface de révolution, via un moteur, en fonction du positionnement du soleil par rapport à la première portion de sorte que l'entrée soit toujours positionnée en un point focal où le rayonnement solaire se focalise pour récupérer ledit rayonnement solaire.

Dans des modes de réalisation préférés de l'invention, la surface de révolution comporte une troisième portion et une quatrième portion, coaxiales avec la première portion et la deuxième portion, formant liaison entre la première portion et la deuxième portion ; les première, deuxième, troisième et quatrième portions forment un ensemble, de volume interne creux.

Dans des modes de réalisation, la surface de révolution est un tore ouvert.

Un tore est dit ouvert lorsqu'il présente une forme de chambre à air.

Dans des exemples de réalisation préférés de l'invention, la surface de révolution est formée par une membrane.

Dans des modes de réalisation préférés de l'invention, pour permettre le passage du rayonnement solaire vers la première portion et la deuxième portion, la membrane est réalisée en tout ou partie dans un matériau transparent au rayonnement ultraviolet.

Dans des modes de réalisation préférés de l'invention, la membrane est réalisée en tout ou partie dans un matériau se dégradant au rayonnement ultraviolet.

Dans des modes de réalisation préférés de l'invention, la membrane est réalisée dans une matière homogène recouvert ou imprégné d'un matériau durcissant réagissant à un agent de durcissement. Une telle matière permet de rendre la membrane rigide durant la durée de vie du véhicule spatial.

Dans des formes préférées de réalisation de l'invention, la membrane est inextensible.

Par inextensible, on entend que la membrane présente une déformation nulle voire quasi nulle pour les efforts que ladite membrane devra supporter pendant sa durée de vie.

Dans des formes préférées de réalisation de l'invention, la membrane est déployable, une fois le véhicule spatial en orbite.

Ainsi, la membrane est réalisée de sorte à pouvoir être conservée dans un volume restreint à bord du véhicule spatial, puis être déployée lorsque ledit véhicule spatial est en orbite.

Dans des exemples de réalisation préférés de l'invention, la membrane est déployable par gonflage.

De préférence, la membrane est inextensible et comporte une pluralité de fils inextensibles agencés de sorte à définir, lors du déploiement par gonflage de ladite membrane, une première courbure pour la première portion et une deuxième courbure pour la deuxième portion.

Dans des modes de réalisation préférés de l'invention, pour déporter la surface de révolution du corps du véhicule spatial, ledit véhicule spatial comporte un mât support, ledit mât support étant solidaire, à une première extrémité, au corps dudit véhicule spatial et à une seconde extrémité opposée à la machine thermique.

Dans des formes préférées de réalisation de l'invention, le mât support est un mat déployable, de préférence par gonflage.

Ainsi, le mât support est réalisé de sorte à pouvoir être conservé dans un volume restreint à bord du véhicule spatial, puis être déployé lorsque ledit véhicule spatial est en orbite.

Dans des exemples de réalisation préférés de l'invention, le mât support est déployable par gonflage.

Dans des dispositions préférées de réalisation de l'invention, le mât support est un mat télescopique.

Dans des modes de réalisation préférés de l'invention, pour minimiser l'encombrement du mât support à bord du véhicule spatial, le mât support comporte une enveloppe repliée en soufflet, à l'état replié.

Dans des modes de réalisation préférés de l'invention, le mât support comporte une enveloppe recouverte ou imprégnée d'un matériau durcissant réagissant à un agent de durcissement. Une telle enveloppe permet de rendre le mât support rigide durant la durée de vie du véhicule spatial.

Dans des exemples de réalisation, l'agent de durcissement est le rayonnement ultraviolet, le rayonnement thermique, un gaz de gonflage du mât support ou de la membrane, ou encore la température.

Dans des modes de réalisation préférés de l'invention, pour récupérer le rayonnement solaire quel que soit le positionnement du véhicule spatial par rapport au soleil, l'entrée de la machine thermique comporte un système optique de focalisation positionné au niveau d'un point focal du concentrateur de rayonnement solaire de type Cassegrain, ledit système optique de focalisation étant rotatif selon un axe de rotation perpendiculaire à un axe de révolution de la surface de révolution.

Dans des modes de réalisation préférés de l'invention, pour produire de l'énergie pour le fonctionnement du véhicule spatial lors des éclipses, ledit véhicule spatial comporte une pile à combustible et, de manière coaxiale autour du mât support :
- un réservoir d'eau, de préférence sous forme vapeur,
- un réservoir d'hydrogène,
- un réservoir d'oxygène.

### Présentation des figures

L'invention sera maintenant plus précisément décrite dans le cadre de modes de réalisation préférés, qui n'en sont nullement limitatifs, représentés sur les figures 1 à 4, dans lesquelles :
la figure 1 illustre une nouvelle architecture d'un satellite suivant l'invention, à l'état déployé,
la figure 2 illustre une section transversale du tore, selon une génératrice dudit tore, suivant un mode de réalisation de l'invention,
la figure 3 illustre une demi-membrane, coupée selon un plan passant par un axe de révolution de la membrane,
la figure 4 illustre un positionnement coaxial de réservoirs autour du mât support pour le fonctionnement du satellite pendant les éclipses.

### Description détaillée de modes de réalisation de l'invention

L'invention est à présent décrite dans le cas non limitatif d'un satellite 10. Elle concerne plus particulièrement les satellites placés sur une orbite géosynchrone, et notamment sur une orbite géostationnaire, stabilisés de façon telle qu'un axe déterminé du satellite reste dirigé vers la Terre.

L'invention est également applicable à tout véhicule spatial tel qu'une sonde spatiale ou d'exploration.

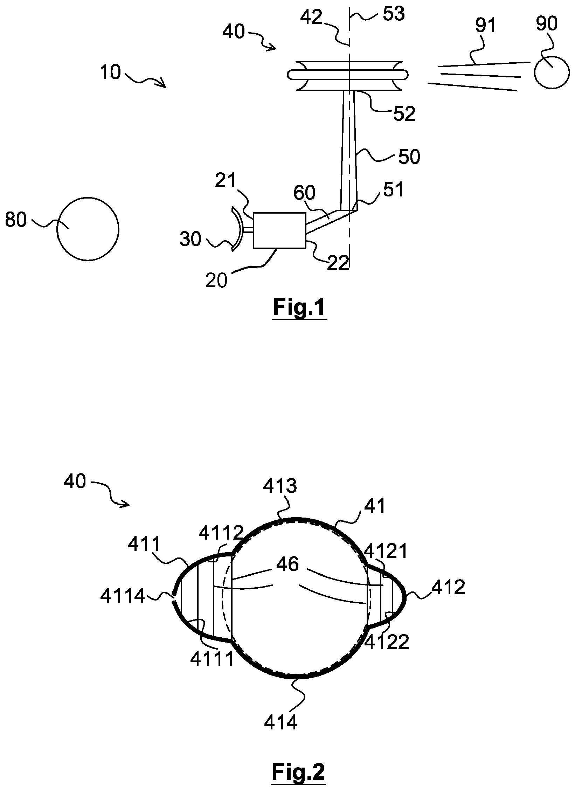

La figure 1 illustre schématiquement l'architecture globale du satellite 10 suivant un mode de réalisation, dans un état déployé, lorsque ledit satellite est en orbite.

Le satellite 10 comporte un corps 20, non limitativement représenté de manière parallélépipédique sur la figure 1, avec une première face 21 orientée vers la Terre 80 et une seconde face 22 opposée à ladite première face.

Le corps 20 comporte généralement des réservoirs, une charge utile, une case à équipements et une électronique de bord.

Le satellite 10 comporte au moins une antenne 30, unique sur la figure 1 à titre d'exemple non limitatif, solidaire du corps 20, de préférence situé du coté de la première face 21, orientée de façon précise en direction d'une zone de la Terre 80 et par exemple destinée aux transmissions radioélectriques.

Une puissance électrique nécessaire à la charge utile du satellite 10 est fournie par une surface de révolution 40 à une machine thermique (non représentée).

La surface de révolution 40 est configurée et destinée à concentrer un rayonnement solaire 91 ; ce rayonnement solaire est ensuite transmis à la machine thermique pour qu'en retour, ladite machine thermique alimente en énergie électrique le satellite 10 pour son fonctionnement.

Dans un exemple préféré de réalisation de la machine thermique, la machine thermique est une machine thermoacoustique.

Dans une forme de réalisation d'une machine thermoacoustique, on peut citer la machine thermoacoustique à boucle de rétroaction électrique décrite dans la demande de brevet français FR 2 956 200. Une telle machine thermoacoustique a l'avantage de présenter un bon rendement de conversion, de l'ordre de 70% du rendement de Carnot, et un faible coût financier. Une telle machine thermoacoustique présente également des dimensions raisonnables, de l'ordre d'un mètre de long et de 30cm de diamètre.

La surface de révolution 40 et la machine thermique sont placées à distance du corps 20 du satellite 10, déportées par un mât support 50.

Le mât support 50 présente une forme allongée, d'axe longitudinal 53, et solidaire, à une première extrémité 51, du corps 20.

Le mât support 50 comporte une seconde extrémité 52, opposée à ladite première extrémité 51, solidaire de la surface de révolution 40 et de la machine thermique.

Dans un mode de réalisation, le mât support 50 est lié directement au corps 20 du satellite 10.

Dans un autre mode de réalisation, pour découpler le mât support 50 du corps 20 du satellite 10, ledit mât support est lié audit corps du satellite, via un mât auxiliaire 60.

Dans l'exemple de la figure 1, le mât auxiliaire 60 est lié à la seconde face 22 du corps 20.

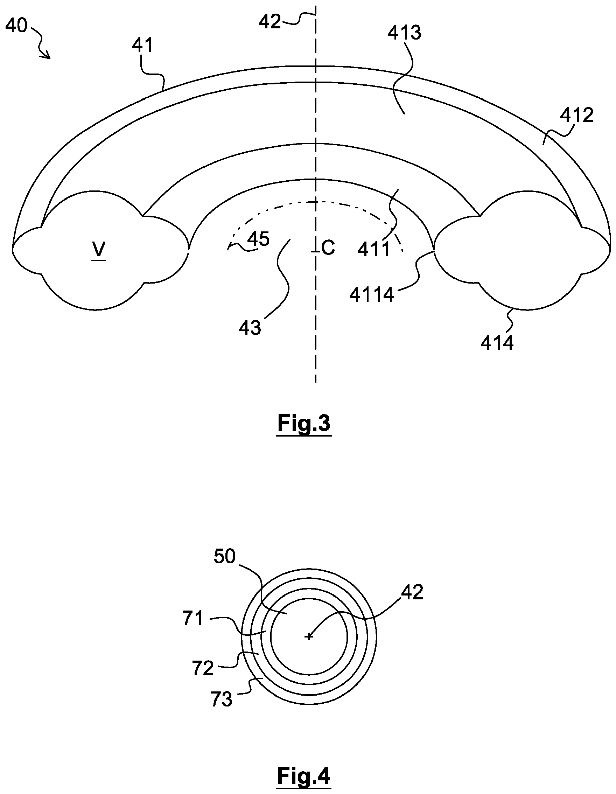

La surface de révolution 40 présente une forme de tore creux ouvert, d'axe de révolution 42 et de centre C, comme illustré en partie sur la figure 3. La surface de révolution 40 est formée par une membrane 41.

La membrane 41 présente un volume interne V, creux.

La membrane délimite un espace 43 dans lequel est situé le centre C.

De préférence, l'axe de révolution 42 de la membrane 41, passant par le centre C, coïncide avec l'axe longitudinal 53 du mât support 50.

Un tore classique présente de manière générale, selon un plan passant par un axe de révolution du tore, c'est-à-dire au niveau d'une génératrice du tore, une section transversale circulaire uniforme, comme illustré sur la figure 2 en pointillé.

Suivant l'invention, le tore, et par conséquent la membrane 41, présente une section transversale sous la forme d'un cercle 41 déformé en deux zones diamétralement opposées comme illustrée sur la figure 2.

La figure 3 illustre une demi-membrane, coupée selon un plan passant par l'axe de révolution 42.

La membrane 41 présente, comme illustré sur la figure 3 :
- une première portion 411, présentant une première courbure,
- une deuxième portion 412, présentant une deuxième courbure, différente de la première courbure,
- la première portion 411 et la deuxième portion 412 sont liées entre elles de part et d'autre par une troisième portion 413 et une quatrième portion 414, à courbure constante et sensiblement égales entre elles.

Les première 411, deuxième 412, troisième 413 et quatrième 414 portions sont chacune une portion de révolution autour de l'axe de révolution 42.

La première portion 411 et la deuxième portion 412 sont à courbure convexe.

Par courbure convexe, on entend une courbure orientée vers un extérieur du volume interne V de la membrane.

Les première 411, deuxième 412, troisième 413 et quatrième 414 portions sont coaxiales, d'axe l'axe de révolution 42.

La première portion 411 et la deuxième portion 412 sont agencées de sorte à présenter un concentrateur de rayonnement solaire de type Cassegrain.

Dans un exemple de réalisation, la première courbure est une courbure parabolique et la deuxième courbure est une courbure hyperbolique.

La membrane 41 comporte un revêtement 4112 sur une surface interne 4111 de la première portion 411 et un revêtement 4122 sur une surface interne 4121 de la deuxième portion 412.

Le revêtement 4112 de la première portion 411 est adapté à former un réflecteur de rayonnement solaire, dit réflecteur primaire.

Le revêtement 4122 de la deuxième portion 412 est adapté à former un réflecteur de rayonnement solaire, dit réflecteur secondaire.

Ainsi, comme illustré sur la figure 3, la première portion 411 est située du coté du centre C de la membrane 41 et la deuxième portion 412 est située du coté opposé au centre C de la membrane 41.

Le réflecteur primaire comporte une ouverture longitudinale 4114, selon un plan sensiblement perpendiculaire à l'axe de révolution de la membrane. Préférentiellement, ladite ouverture longitudinale est selon un plan médian perpendiculaire à l'axe de révolution 42 de la membrane 41.

Ladite ouverture 4114 est dimensionnée de sorte à permettre le passage du rayonnement solaire 91 en direction de l'espace 43 délimité par la membrane 41, après réflexions, multiples ou non, sur les réflecteurs primaire et secondaire.

On constate qu'avec une telle forme géométrique de membrane 41, il n'est plus nécessaire de recourir à un moteur pour orienter ladite membrane vers le soleil, comme c'est le cas pour les panneaux solaires traditionnels. La forme torique de la membrane 41 permet avantageusement de concentrer le rayonnement solaire 91, quel que soit le positionnement relatif du soleil 90 par rapport au satellite 10, en direction de l'espace 43 délimité par la membrane 41, vers une pluralité de points, dits points focaux, dans la mesure où une trajectoire du satellite 10 reste plane et où le satellite 10 garde une attitude constante. L'ensemble de ces points focaux forme sensiblement un cercle 45 autour de l'axe de révolution 42 de la membrane 41, de préférence de centre C, et de rayon sensiblement constant. Un demi-cercle est reproduit en pointillé sur la figure 3 à titre illustratif.

Le rayonnement solaire 91 étant focalisé vers l'espace 43 délimité par la membrane 41, la machine thermique est positionnée de telle sorte qu'elle récupère la totalité du rayonnement solaire, quel que soit le positionnement du soleil 90 par rapport à la membrane 41.

La machine thermique est positionnée au niveau de la seconde extrémité 52 du mat, dans le prolongement du mât support 50.

Dans un mode de réalisation, la machine thermique est positionnée par rapport à la membrane 41 de telle sorte qu'une entrée de la machine thermique est située en un point du cercle 45 définissant l'ensemble des points focaux. Un moteur, de préférence électrique, fait pivoter la machine thermique, ou son entrée, autour de l'axe longitudinal 53 du mât support 50 en fonction du positionnement du soleil par rapport à la membrane 41, de telle sorte que l'entrée de la machine thermique soit toujours positionnée en un point focal où le rayonnement solaire 91 arrive pour récupérer ledit rayonnement solaire concentré.

Dans un autre mode de réalisation, la machine thermique comporte un tube creux, d'axe l'axe longitudinal 53 du mât support 50. Le tube creux comporte une dérivation, de préférence sensiblement perpendiculaire audit tube, comprenant, à une extrémité opposée au tube, un système optique de focalisation. La machine thermique est positionnée par rapport à la membrane 41 de telle sorte que le système optique de focalisation est situé en un point du cercle 45 définissant les points focaux du concentrateur de rayonnement solaire de type Cassegrain.

Le système optique de focalisation est de préférence configuré pour récupérer le rayonnement solaire 91 sur sensiblement 180° et le transmettre, via un cheminement à l'intérieur de la dérivation et du tube creux, à l'entrée de la machine thermique.

Le système optique de focalisation est choisi de sorte à résister à de fortes températures, de l'ordre de 1000°C. Ledit système optique de focalisation est choisi en outre selon la performance optique souhaitée, par exemple en termes de transparence, de pureté optique, de durabilité,...

Dans une forme de réalisation de la dérivation, ladite dérivation est un guide d'onde.

Dans un exemple de guide d'onde, ledit guide d'onde est une fibre optique adaptée pour résister à de fortes températures, de l'ordre de 1000°C.

Dans une forme de réalisation du système optique de focalisation, ledit système optique de focalisation est une lentille.

Dans un exemple de réalisation, la lentille est une lentille en saphir.

Un moteur, de préférence électrique, fait pivoter le système optique de focalisation, éventuellement en même temps que la machine thermique, autour de l'axe longitudinal du mât support en fonction de l'éclairement solaire, de telle sorte que le système optique de focalisation soit toujours positionné à un point focal où le rayonnement solaire 91 arrive pour récupérer le rayonnement solaire concentré.

Dans un mode amélioré de réalisation, seule la dérivation et le système optique de focalisation sont mobiles en rotation autour de l'axe longitudinal du mat support. La dérivation et le système optique de focalisation sont reliés au tube de la machine thermique par un joint tournant permettant la rotation de la dérivation et du système optique de focalisation sans entraîner la rotation du tube et de la machine thermique. Un moteur de plus petite dimension est alors utilisable.

Le mât support 50 et la surface de révolution 40 sont des structures préférentiellement réalisées dans un matériau inextensible.

Lesdites structures sont réalisées de telle sorte qu'elles puissent être transportées et/ou conservées dans un volume réduit à bord du satellite 10, puis être déployées et rigidifiées in situ, c'est à dire une fois que le satellite est en orbite.

Les structures du mât support 50 et de la surface de révolution 40 sont de préférence souples et légères et présentent, à bord du satellite 10, un volume réduit pour minimiser la masse et le volume du satellite 10 lors de son lancement.

Lesdites structures sont en général stockées dans un faible volume, par exemple à l'état replié, enroulé ou effondré, avec ou sans contraintes.

Lesdites structures se déploient en orbite sans aide extérieure ou avec des moyens de déploiement appropriés, tels que par exemple vessie gonflable, vérin, ou encore dispositif mécanique articulé.

De préférence, afin que le déploiement des structures ne soit pas trop brutal et n'endommage donc pas ces dernières, lesdites structures comprennent en outre un dispositif de freinage, destiné à limiter la vitesse de déploiement desdites structures pendant leur déploiement.

Dans un mode de réalisation de structure, au moins une des structures est constituée de pièces rigides articulées entre elles qui, une fois déployées, permettent de maintenir ladite au moins une structure déployée tant que le satellite 10 est en orbite.

Dans un autre mode de réalisation, au moins une des structures est une structure gonflable, de préférence les deux structures sont gonflables.

Dans un exemple préféré de réalisation, des moyens de gonflage permanents sont utilisés pour maintenir au moins une structure déployée durant la durée de vie du satellite 10.

Dans un autre exemple préféré de réalisation, afin de maintenir la structure déployée durant la durée de vie du satellite 10, au moins une structure est recouverte ou imprégnée d'un matériau durcissant après le déploiement.

Par matériau durcissant après le déploiement, on entend un matériau qui se durci, une fois le déploiement réalisé.

L'utilisation d'un matériau durcissant après le déploiement permet de pallier à d'éventuelles altérations de la au moins une structure, en termes d'étanchéité vis-à-vis du milieu ambiant, qui pourraient intervenir au cours de la durée de vie du satellite 10, ce qui par conséquent permet d'augmenter la durée de vie de la structure en orbite. Ainsi, il n'est pas nécessaire de recourir à une structure présentant des performances en termes d'étanchéité sur le long terme, ce qui présente un intérêt non négligeable en termes de coût de réalisation du satellite 10.

Dans un exemple de réalisation du matériau durcissant, ledit matériau durcissant réagit à au moins un agent de durcissement, tel que par exemple le rayonnement ultraviolet, le rayonnement thermique, la température, l'humidité, ou encore un gaz embarqué pour le gonflage de la structure.

Dans une forme particulière de réalisation, la au moins une structure comporte un élément chauffant, tel que par exemple un filament chauffant, dont le chauffage commande le durcissement du matériau durcissant, une fois la au moins une structure déployée.

Dans une forme particulière de réalisation, lorsque la au moins une structure est imprégnée d'un matériau durcissant, ladite au moins une structure peut être réalisée à partir de fibres préimprégnées, de préférence couramment employées pour la constitution de matériaux composites notamment en aéronautique, telle que par exemple des fibres minérales (fibres de carbone, de verre, en polyamide, en polyester,...) ou des fibres artificielles, (fibres végétales), ou un mélange de fibres de différentes natures.

Du fait de son imprégnation par un matériau durcissant telle qu'une résine polymérisable par exemple, la au moins une structure est maintenue souple aussi longtemps que la résine d'imprégnation n'est pas polymérisée, puis durcie et rigidifiée, après déploiement de la au moins une structure et pendant son maintien déployé et tendu, par la polymérisation de la résine, déclenchée par exposition de la au moins une structure à un agent approprié de durcissement ou de polymérisation de la résine en fonction de la nature de cette résine.

Mais, quelles que soient les réalisations d'une structure, il est essentiel que le démarrage du durcissement soit contrôlable, et adapté ou adaptable aux conditions ambiantes régnant sur le site de déploiement de ladite structure, c'est à dire en orbite.

Dans un mode de réalisation du mât support, la structure dudit mât support est une enveloppe composée de pièces emboitées telles qu'au déploiement, les pièces se développent de manière télescopique. De préférence, la structure est gonflable et recouverte ou imprégnée en tout ou partie d'un matériau durcissant après le déploiement.

Dans un autre mode de réalisation du mât support, la structure dudit mât support est une enveloppe du type ruban, stocké de façon enroulée autour d'un dévidoir, et qui se déroule lors du déploiement.

Dans une forme de réalisation du mât support 50, lorsque l'enveloppe dudit mât support est recouverte ou imprégnée d'un matériau durcissant après déploiement, il n'est pas nécessaire que l'enveloppe soit étanche pendant la durée de vie du satellite 10, il suffit que l'enveloppe soit étanche pendant sa phase de déploiement et jusqu'au durcissement du matériau durcissant. Ainsi, la quantité de gaz nécessaire au gonflage de l'enveloppe est réduite et, pour un coût donné, la durée de vie du satellite 10 est très nettement allongée.

Dans un mode de réalisation de la membrane 41, ladite membrane est réalisée dans une matière homogène recouverte ou imprégnée d'un matériau durcissant, hormis une partie longitudinale pour former l'ouverture 4114. Les revêtements 4112 et 4122 formant les réflecteurs primaire et secondaire sont réalisés dans un matériau réfléchissant au rayonnement solaire, hormis une partie longitudinale pour former l'ouverture 4114.

Dans une forme de réalisation, les réflecteurs primaire et secondaire sont formés par dépôt de vapeur d'argent ou d'aluminium sur la surface interne 4111 de la première portion 411 et sur la surface interne 4121 de la deuxième portion 412.

Dans une forme de réalisation, la membrane 41 comporte, au niveau du réflecteur primaire et du réflecteur secondaire, une couche protectrice (non représentée) réalisée dans un matériau durcissant au rayonnement solaire

Dans un exemple de réalisation de la couche protectrice, ladite couche protectrice est réalisée à partir d'un polymère transparent au rayonnement solaire.

Les deux parties longitudinales sont réalisées dans un matériau se dégradant après réaction avec un agent de dégradation de manière telle que le rayonnement ultraviolet permette le passage du rayonnement solaire 91 dans l'espace 43 délimité par la membrane 41.

La matière homogène est réalisée dans un matériau transparent au rayonnement ultraviolet de telle sorte que le rayonnement solaire puisse traverser la matière homogène au niveau de la troisième portion 413 et de la quatrième portion 414 et rencontrer les réflecteurs primaire et secondaire.

Dans un autre mode de réalisation de la membrane 41, ladite membrane est réalisée dans une matière homogène non recouverte ou imprégnée de matériau durcissant. Seuls les couches protectrices des réflecteurs primaire et secondaire sont réalisées dans un matériau durcissant à un agent durcisseur, en plus d'être transparent au rayonnement solaire. La matière homogène de la membrane 41 est réalisée dans un matériau se dégradant après réaction avec un agent de dégradation tel que le rayonnement ultraviolet, jusqu'à disparition.

Dans ce mode de réalisation, les réflecteurs primaire et secondaire ne sont alors plus reliés l'un à l'autre, une fois la matière homogène dégradée. Dans ce cas, la matière homogène de quelques parties de la membrane, formant section transversale, et permettant un lien entre le revêtement 4112 formant réflecteur primaire et le revêtement 4122 formant réflecteur secondaire, est recouverte ou imprégnée de matériau durcissant. Lesdites parties ne sont pas censées se dégradées aux UV.

De même, une fois la matière homogène dégradée, le revêtement formant réflecteur primaire est divisé en deux parties, selon un plan perpendiculaire à l'axe de révolution 42, au niveau de l'ouverture 4114. La membrane 41 comporte des poutres de liaison (non représentées), de préférence elles aussi déployables, de préférence par gonflage, pour relier les deux parties du réflecteur primaire.

Les poutres de liaison sont de préférence réalisées dans un matériau durcissant.

Pour que la membrane 41 prenne la forme torique non uniformément circulaire, en section transversale, ladite membrane comporte, comme illustré sur la figure 2, des fils 46, souples et inextensibles.

Par souple, on entend que le fil peut être recourbé, replié ou enroulé pour se loger, à l'état replié, avec la membrane 41 dans le faible volume dédié du satellite 10 lors du lancement.

Par inextensible, on entend que le fil présente une déformation nulle voire quasi nulle pour les efforts qu'il devra supporter pendant le déploiement de la membrane 41.

La première courbure de la première portion 411, respectivement la deuxième courbure de la deuxième portion 412, est réalisée à partir d'au moins un fil 46.

Les fils 46 sont positionnés et dimensionnés, à l'état replié, de façon telle que lorsque la membrane 41 se déploie, les fils se tendent à leur maximum en cours de déploiement de ladite membrane et provoquent la déformation de ladite membrane jusqu'à former d'une part la première courbure de la première portion 411 et d'autre part la deuxième courbure de la deuxième portion 412, une fois la membrane à l'état déployée.

Dans un exemple de réalisation, lesdits fils sont réalisés dans un matériau transparent au rayonnement ultraviolet.

Préférentiellement, lesdits fils sont réalisés dans un matériau se dégradant après réaction avec un agent de dégradation tel que le rayonnement ultraviolet, après le durcissement des couches protectrices des réflecteurs primaire et secondaire.

Dans un mode de réalisation, le satellite 10 comporte un radiateur (non représenté), associé à la machine thermique.

Dans un exemple de réalisation, ledit radiateur est disposé le long du mât support 50, à proximité d'une source froide du moteur.

Dans un mode de réalisation, pour produire de l'énergie pour le fonctionnement du satellite 10 lors des éclipses, en remplacement de la machine thermique ou en combinaison de la machine thermique, le satellite 10 comporte une pile à combustible, de préférence une pile à combustible haute température, fonctionnant à des températures typiques de l'ordre de 800°C.

Dans un premier mode de réalisation, le satellite 10 comporte une pile à basse température, de préférence positionnée à l'intérieur du satellite 10.

Dans un autre mode de réalisation, le satellite 10 comporte une pile à haute température, de préférence positionnée sur le mât support 50, à proximité d'une source chaude de la machine thermique, par effet de synergie évident.

De préférence, dans l'exemple d'une pile à combustible H2/O2, le satellite 10 comporte trois réservoirs configurés de manière coaxiale autour du mât support 50, partant du mât support 50 et en s'éloignant de celui-ci, comme illustré sur la figure 4 :
- un réservoir 71 d'eau sous forme vapeur,
- un réservoir 72 d'hydrogène,
- un réservoir 73 d'oxygène.

Les trois réservoirs 71, 72, 73 se vident ou se remplissent alternativement, en présence ou non d'une éclipse.

Un tel positionnement des réservoirs est avantageux, principalement du au fait de que:
- l'oxygène est séparé de l'hydrogène,
- l'hydrogène, composé le plus volatile, doit traverser plusieurs parois formant les réservoirs d'eau et d'oxygène, avant de fuir dans le vide ; une meilleure étanchéité est ainsi obtenue,
- les trois réservoirs 71, 72, 73, compte tenu de leur proximité avec la machine thermique, présentent une deuxième fonction qui est celle de radiateur, car la machine thermique a besoin d'une source froide,
- la fonction de radiateur des trois réservoirs permet avantageusement de conserver notamment l'eau, y compris pendant les phases d'éclipse, sous forme de vapeur à des températures très faibles. Pour cela, il suffit que la pression de stockage soit très faible ce qui implique des réservoirs de grandes dimensions, et donc une surface radiative importante, d'où un radiateur particulièrement efficace.
- les gaz de la pile à combustible, internes au radiateur, serviront de vecteur de transfert de chaleur, laquelle se fera donc par convection et conduction.

De préférence, le réservoir d'oxygène est positionné le plus éloigné du mât support 50. Un tel positionnement permet, pendant la phase d'éclipse de conserver un minimum de température à l'eau sous phase vapeur et à très faible pression, typiquement 50 mbar.

Dans une forme de réalisation des réservoirs, lesdits réservoirs sont réalisés dans un matériau étanche à leur contenu sur la durée de vie d'un satellite, qui est de l'ordre de 18 ans.

Dans une forme de réalisation des réservoirs, lesdits réservoirs sont réalisés dans un matériau durcissant.

Dans une forme de réalisation des réservoirs, les parois sont en toute ou partie transparentes.

Dans une forme de réalisation des réservoirs, les parois formant les réservoirs sont en toute ou partie réfléchissantes.

Dans une forme de réalisation des réservoirs, le mât 50 pourra lui-même être une partie du réservoir (par exemple celui d'hydrogène).

La description ci-avant illustre clairement que par ses différentes caractéristiques et leurs avantages, la présente invention atteint les objectifs qu'elle s'était fixés. En particulier, elle propose un véhicule spatial présentant un investissement financier moindre par rapport aux véhicules spatiaux, tout en préservant la production d'énergie électrique, la simplicité de mise en oeuvre et sans pénaliser le poids du véhicule spatial.

## Revendications

1. - Véhicule spatial (10) comportant :
- un corps (20),
- une surface de révolution (40), solidaire dudit corps,
**caractérisé en ce que** le véhicule spatial comporte une machine thermique positionnée au centre de la surface de révolution (40), **en ce que** ladite surface de révolution comporte une première portion (411) formant un concentrateur de rayonnement solaire en direction de ladite machine thermique et une deuxième portion (412), coaxiale avec la première portion (411), et telle que la première portion (411) et la deuxième portion (412) forme l'un par rapport à l'autre un concentrateur de rayonnement solaire de type Cassegrain, dont un point focal est situé au niveau de la machine thermique.

2. - Véhicule spatial (10) selon la revendication 1 dans lequel la surface de révolution (40) comporte une troisième portion (413) et une quatrième portion (414), coaxiales avec la première portion (411) et la deuxième portion (412), formant liaison entre la première portion (411) et la deuxième portion (412), les première, deuxième, troisième et quatrième portions formant un ensemble, de volume interne creux (V).

3. - Véhicule spatial (10) selon la revendication 2 dans lequel la surface de révolution (40) est formée par une membrane (41).

4. - Véhicule spatial (10) selon la revendication 3 dans lequel la membrane (41) est réalisée en tout ou partie dans un matériau transparent au rayonnement ultraviolet.

5. - Véhicule spatial (10) selon l'une des revendications 3 ou 4 dans lequel la membrane (41) est réalisée en tout ou partie dans un matériau se dégradant au rayonnement ultraviolet, après son déploiement.

6. - Véhicule spatial (10) selon l'une des revendications 3 à 5 dans lequel la membrane (41) est déployable.

7. - Véhicule spatial (10) selon la revendication 6 dans lequel la membrane (41) est déployable par gonflage.

8. - Véhicule spatial (10) selon la revendication 7 dans lequel la membrane (41) comporte une pluralité de fils inextensibles (45) agencés de sorte à définir, lors du déploiement de ladite membrane, une première courbure pour la première portion (411) et une deuxième courbure pour la deuxième portion (412).

9. - Véhicule spatial (10) selon l'une des revendications 1 à 8 comportant un mât support (50), ledit mât support étant solidaire, à une première extrémité (51), au corps (20) du véhicule spatial (10) et à une seconde extrémité (52) opposée à la machine thermique.

10. - Véhicule spatial (10) selon la revendication 9 dans lequel le mât support (50) est un mat déployable.

11. - Véhicule spatial (10) selon l'une des revendications 9 ou 10 dans lequel le mât support (50) est un mat télescopique.

12. - Véhicule spatial (10) selon l'une des revendications 9 à 11 dans lequel le mât support (50) comporte une enveloppe recouverte ou imprégnée d'un matériau durcissant.

13. - Véhicule spatial (10) selon l'une des revendications 1 à 12 dans lequel une entrée de la machine thermique comporte un système optique de focalisation positionné au niveau d'un point focal concentrateur de rayonnement solaire de type Cassegrain, ledit système optique de focalisation étant rotatif selon un axe de rotation perpendiculaire à un axe de révolution (42) de la surface de révolution (40).

14. - Véhicule spatial (10) selon l'une des revendications 9 à 13 comportant, de manière coaxiale autour du mât support (50) :
- un réservoir (71) d'eau,
- un réservoir (72) d'hydrogène,
- un réservoir (73) d'oxygène.

## Patentansprüche

1. Raumfahrzeug (10), umfassend:
- einen Körper (20),
- eine mit dem Körper fest verbundene Rotationsfläche (40),
**dadurch gekennzeichnet, dass** das Raumfahrzeug eine thermische Maschine umfasst, die im Mittelpunkt der Rotationsfläche (40) angeordnet ist, dass die Rotationsfläche einen ersten Abschnitt (411) umfasst, der einen Konzentrator für Sonnenstrahlung in Richtung der thermischen Maschine bildet, und einen zweiten Abschnitt (412), der koaxial zum ersten Abschnitt (411) ist und so, dass der erste Abschnitt (411) und der zweite Abschnitt (412) zueinander einen Konzentrator für Sonnenstrahlung vom Typ Cassegrain bilden, dessen einer Brennpunkt auf Ebene der thermischen Maschine liegt.

2. Raumfahrzeug (10) nach Anspruch 1, wobei die Rotationsfläche (40) einen dritten Abschnitt (413) und einen vierten Abschnitt (414) umfasst, die koaxial zum ersten Abschnitt (411) und zweiten Abschnitt (412) sind, die die Verbindung zwischen dem ersten Abschnitt (411) und dem zweiten Abschnitt (412) bilden, wobei die ersten, zweiten, dritten und vierten Abschnitte eine Anordnung mit hohlem Innenvolumen (V) bilden.

3. Raumfahrzeug (10) nach Anspruch 2, wobei die Rotationsfläche (40) durch eine Membran (41) gebildet wird.

4. Raumfahrzeug (10) nach Anspruch 3, wobei die Membran (41) ganz oder teilweise aus einem für ultraviolette Strahlung transparenten Material ausgeführt ist.

5. Raumfahrzeug (10) nach einem der Ansprüche 3 oder 4, wobei die Membran (41) ganz oder teilweise aus einem Material ausgeführt ist, das nach dem Entfalten bei ultravioletter Strahlung abgebaut wird.

6. Raumfahrzeug (10) nach einem der Ansprüche 3 bis 5, wobei die Membran (41) entfaltbar ist.

7. Raumfahrzeug (10) nach Anspruch 6, wobei die Membran (41) durch Aufblasen entfaltbar ist.

8. Raumfahrzeug (10) nach Anspruch 7, wobei die Membran (41) eine Mehrzahl von undehnbaren Drähten (45) umfasst, die so angeordnet sind, dass sie beim Entfalten der Membran eine erste Krümmung für den ersten Abschnitt (411) und eine zweite Krümmung für den zweiten Abschnitt (412) definieren.

9. Raumfahrzeug (10) nach einem der Ansprüche 1 bis 8 mit einem Trägermast (50), wobei der Trägermast an einem ersten Ende (51) fest mit dem Körper (20) des Raumfahrzeugs (10) und an einem zweiten entgegengesetzten Ende (52) fest mit der thermischen Maschine verbunden ist.

10. Raumfahrzeug (10) nach Anspruch 9, wobei der Trägermast (50) ein entfaltbarer Mast ist.

11. Raumfahrzeug (10) nach einem der Ansprüche 9 oder 10, wobei der Trägermast (50) ein Teleskopmast ist.

12. Raumfahrzeug (10) nach einem der Ansprüche 9 bis 11, wobei der Trägermast (50) einen Mantel umfasst, der mit einem härtenden Material überzogen oder getränkt ist.

13. Raumfahrzeug (10) nach einem der Ansprüche 1 bis 12, wobei ein Eingang der thermischen Maschine ein optisches Fokussierungssystem umfasst, das auf Ebene eines Sonnenstrahlung konzentrierenden Brennpunkts vom Typ Cassegrain angeordnet ist, wobei das optische Fokussierungssystem entlang einer Drehachse senkrecht zu einer Rotationsachse (42) der Rotationsfläche (40) drehbar ist.

14. Raumfahrzeug (10) nach einem der Ansprüche 9 bis 13, koaxial um den Trägermast (50) herum umfassend:
- einen Wassertank (71),
- einen Wasserstofftank (72),
- einen Sauerstofftank (73).

## Claims

1. Spacecraft (10) comprising:
- a body (20),
- a surface of revolution (40) of one piece with said body,
**characterized in that** the spacecraft comprises a heat engine positioned at the center of the surface of revolution (40), **in that** said surface of revolution comprises a first portion (411) forming a concentrator for solar radiation in the direction of said heat engine and a second portion (412) coaxial with the first portion (411) and such that the first portion (411) and the second portion (412) forms each with respect to the other a solar radiation concentrator of the Cassegrain type, one focal point of which is located at the heat engine.

2. Spacecraft (10) according to Claim 1 in which the surface of revolution (40) comprises a third portion (413) and a fourth portion (414) coaxial with the first portion (411) and the second portion (412) forming a link between the first portion (411) and the second portion (412), the first, second, third and fourth portions forming a whole with a hollow internal volume (V).

3. Spacecraft (10) according to Claim 2 in which the surface of revolution (40) is formed by a membrane (41).

4. Spacecraft (10) according to Claim 3 in which the membrane (41) is wholly or partly made of a material which is transparent to ultraviolet radiation.

5. Spacecraft (10) according to either of Claims 3 and 4 in which the membrane (41) is wholly or partly made of a material which degrades in ultraviolet radiation after it has deployed.

6. Spacecraft (10) according to any one of Claims 3 to 5 in which the membrane (41) can be deployed.

7. Spacecraft (10) according to Claim 6 in which the membrane (41) can be deployed by inflation.

8. Spacecraft (10) according to Claim 7 in which the membrane (41) comprises a plurality of inextensible filaments (45) in such a way as to define a first curvature for the first portion (411) and a second curvature for the second portion (412) during deployment of said membrane.

9. Spacecraft (10) according to any one of Claims 1 to 8 comprising a supporting mast (50), the first supporting mast being of one piece at a first extremity (51) with the body (20) of the spacecraft (10) and opposite the heat engine at a second extremity (52).

10. Spacecraft (10) according to Claim 9 in which the supporting mast (50) is a deployable mast.

11. Spacecraft (10) according to either of Claims 9 and 10 in which the supporting mast (50) is a telescopic mast.

12. Spacecraft (10) according to any one of Claims 9 to 11 in which the supporting mast (50) comprises an envelope covered or impregnated with a hardening material.

13. Spacecraft (10) according to any one of Claims 1 to 12 in which one input to the heat engine comprises an optical focusing system positioned at a focal point concentrating solar radiation of the Cassegrain type, said optical focusing system being capable of rotation about an axis of rotation perpendicular to an axis of revolution (42) of the surface of revolution (40).

14. Spacecraft (10) according to any one of Claims 9 to 13 comprising, coaxially around the supporting mast (50):
- a water tank (71),
- a hydrogen tank (72),
- an oxygen tank (73).
